# EUROPEAN PATENT APPLICATION

(11) **EP 0 585 965 A1**
(43) Date of publication of application: **09.03.1994**
(21) Application number: 93116621.9
(22) Date of filing: 11.07.1990
(51) Int. Cl.: B29C 67/20, B29C 67/22, B29C 67/12, B29C 67/14, B29C 67/18, B32B 31/00

(54) **Process for the production of composite molded articles**

(30) Priority: 12.07.1989 JP 179830/89; 02.10.1989 JP 255304/89; 02.10.1989 JP 255305/89; 07.12.1989 JP 316403/89
(62) Divisional of application: 90113245.6
(71) Applicant: TEIJIN LIMITED, Osaka (JP)
(72) Inventor: Inoue, Masataka, Kawasaki-shi Kanagawa-ken 214 (JP); Yamamoto, Michio, Iwakuni-shi, Yamaguchi-ken (JP); Yamada, Takeyoshi, Iwakuni-shi, Yamaguchi-ken (JP); Kimura, Shigekazu, Iwakuni-shi, Yamaguchi-ken (JP)
(74) Representative: Kraus, Walter, Dr.

(57) **Abstract**

Disclosed is a process for the production of an integral composite molded item comprising
(i) a surface portion comprising a synthetic resin phase containing a fibrous reinforcing material,
(ii) a core portion comprising the synthetic resin phase containing bubble-containing particles, and
(iii) a separation layer positioned between the surface portion and the core portion,
   the process comprising the steps of:
   (a) providing in a substantially sealed mold a separation layer which does not substantially pass therethrough compressed lightweight particles of an elastic material but which is capable of passing a synthetic resin or its precursor that is liquidized at the time of molding;
   (b) providing the synthetic resin or its precursor in the mold;
   (c) arranging a fibrous reinforcing material between the separation layer and the mold, integrated with the separation layer or separately but associated therewith;
   (d) providing an aggregate of the compressed particles of the lightweight elastic material on a side of the separation layer opposite to the side of an inner surface of the mold;
   (e) causing volume expansion of the aggregate relieving compression urged on the compressed lightweight particles to thereby expand the lightweight particles;
   (f) flowing the liquidized synthetic resin or its precursor through the separation layer to spread it over between the separation layer and the mold, and among the particles of the lightweight elastic material, while pressing the separation layer onto the inner surface of the mold as the result of volume expansion in the step (e) above;
   (g) completing formation-solidification or solidification of the synthetic resin to form a surface portion and a core portion; and
   (h) taking out the resulting composite molded item.
The type of the resin and the type of bubble-containing particles may be selected and combined differently.

## Description

The present invention relates to a process for the production of composite molded articles. More particularly, it relates to a process for the production of integrated composite molded items which comprises (i) a surface portion composed of a synthetic resin phase containing a fibrous reinforcing material, (ii) a foam-like core portion made of the synthetic resin phase containing a plurality of foamed or hollow particles and (iii) a separation layer arranged between the core portion and the surface portion.

Composite molded items whose core portion has a foamed core and whose surface portion is constructed by a fiber-reinforced resin exhibit excellent lightweight property and toughness and therefore they are put into practice in various fields and further improved molded items and process for their productions have been proposed.

Known processes for the production of molded items having the above-described construction include, for example, a process including steps of forming a foamed core for a core portion in advance, wrapping molded item with a woven cloth as a reinforcing material, placing the wrapped item in a mold, injecting a liquid molding resin into the mold to form a surface portion and then taking out the resulting composite molded item from the mold, and a process including the steps of preforming a member having a cavity and serving as a surface portion in advance, injecting an expandable polyurethane with a forming agent or the like in the cavity to form therein foam core portion to obtain a composite molded item. Hereafter, concrete explanation will be made.
(i) Japanese Laid-Open Patent Publication (Kokai) No. 162207/1988 (corresponding to European Patent Application No. 0272359) discloses a process for the production of a molded item which comprises the steps of preforming a thermoelastic rigid foam into a predetermined shape, wrapping the preformed foam with a woven cloth to give a preformed foam core, placing the preformed foam core in a mold having inner confining surfaces which serves to form therealong a contour of a finally obtained member and which can heat a specified portion of the core, injecting a liquid, thermosetting moldable resin into the mold, heating the mold to expand the foam core to allow the woven cloth wrapping the foam core to compress against the inner confining surfaces of the mold due to force of expansion of the foam and curing the resin to obtain a molded item. Although it has a feature that it can produce lightweight, tough composite molded items which have not been obtained by the conventional processes, the process referred to above has various limitations, for example, that (a) the foam core to be preformed must have a shape as close as possible to that of the mold, (b) as for the quality of the foam core, the foam core must be selected from those having a temperature of thermal expansion in a proper range, and (c) the foam core to be used must be closed-cell foams so that no thermosetting resin penetrates in the cavity thereof.
(ii) Japanese Patent Publication (Kokoku) No. 39107/1975 discloses a process for the production of an unsaturated polyester form including the steps of providing a resin composition comprising an unsaturated polyester resin, microcapsules composed of a thermoplastic synthetic resin capable of being expanded at a temperature no lower than its softening point due to volume expansion of a substance contained therein to thereby forming expanded microballoons, a polymerization initiator, and one or more optionally added additives; heating the resin composition at a temperature no lower than that at which the microcapsules are fuly expanded to form balloons, and curing by heating the composition before the balloons are broken. This process uses microcapsules which can form microballoons as the result of volume expansion and cures the unsaturated polyester while allowing the microcapsules to expand in it. The molded item obtained contains the foamed microballoons dispersed in the resin throughout and therefore the molded item has only insufficient strength.
(iii) Japanese Laid-Open Patent Publication (Kokai) No. 15835/88 discloses a process for the production of an foamed polymer comprising the steps of providing a blend of a heat-crosslinkable polymer with a heat-expandable microspheres, heating the blend to become a foamed mixture due to the expansion of the microspheres, and then crosslinking in a mold or the like.
   More specifically, the process comprises blending a heat-crosslinkable polymer such as rubber, polyurethane, epoxy resin or phenol resin with expandable microspheres, expanding the microspheres in advance to obtain prefoamed product, press molding the prefoamed product in a mold to obtain compressed crosslinked molded items. The molded items obtained contains expanded microspheres dispersed therein throughout.
(iv) Japanese Laid-Open Patent Publication (Kokai) No. 55966/73 discloses a process for the production of a foamed thermosetting synthetic resin comprising the steps of forming microcapsules from a thermoplastic synthetic resin composition which can be converted to microballoons as the result of volume expansion of a substance contained therein at a temperature no lower than the softening point of the resin, adding the microcapsules to a thermosetting synthetic resin and mixing the components, expanding the microcapsules in a molding step while curing the resin.
   The molded item obtained by the process contains expanded micro hollow particles dispersed therein throughout.
(v) Japanese Laid-Open Patent Publication (Kokai) No. 58062/73 (corresponding to U. S. Patent 3,842,020) discloses a process for the production of a thermo-set synthetic resinous resol foam, comprising the steps of providing an intimate mixture of a resol resin and a catalyst for the resol resin, confirning the mixture with a mold having a desired shape, and curing the resin, wherein prior to charging the mixture in a cavity of the mold, a number of expandable microspheres of a thermoplastic synthetic resin in which microspheres a volatile liquid blowing agent is included are incorporated in the mixture, and the resulting mixture is cured at a temperature at which the expandable microspheres cause their expansion.
   Molded items obtained by this process, like the ones described in (iv) above, contain expanded microspheres dispersed therein throughout.
(vi) Japanese Utility Model Publication (Kokoku) No. 24521/87 proposes a lightweight molded product comprised by a fiber-reinforced unsaturated polyester resin, which comprises two surface layers made of a fiber-containing unsaturated polyester resin, and a core layer containing a number of expanded particles of a polyolefin type resin or ground product thereof and being formed integrally between the two surface layers.

The lightweight molded product is obtained by a process comprising the steps of placing glass fiber in a mold, covering the glass fiber with an aliquot of a stock solution of an unsaturated polyester resin to form a surface layer, casting into the mold a mixture of expanded particles of a polyolefin resin and another aliquot of the stock solution of the unsaturated polyester resin to form a core layer, covering a glass fiber-containing unsaturated polyester resin thereon to form another surface layer, clamping the mold, and then curing the resin.

As described above, this process uses already expanded particles, which makes it difficult to uniformly apply pressure onto the surface layers throughout upon molding. Therefore, it is uneasy to obtain molded products having uniform quality stably by the process. In addition, although it is suitable for obtaining board type molded items in which an unsaturated polyester resin containing expanded particles is present as a core between the overlying and underlying surface layers, the above described process is unsuitable as a process for the production of molded materials having a curved surface.

The above-described prior arts are disadvantageous because they have defects that (i) they involve complicated steps and troublesome operations for obtaining composite molded items, resulting in that the production efficiency of the molded items is low and high cost is incurred; (ii) the composite molded items obtained have unsatisfactory strength and appearance; or (iii) the shape or size of the composite molded items are limited.

Therefore, it is a first object of the present invention to provide a process for the production of a composite molded item, which enables one to obtain by relatively simple operations a composite molded item composed substantially of a surface portion and a center portion (core portion) containing bubble-containing particles such as foamed resinous microspheres or hollow beads.

It is a second object of the present invention to provide a process for the production of a composite molded item, which enables one to obtain the composite molded item having the above-described construction substantially in a single step without resort to troublesome operations and complicated conditions.

Another object of the present invention is to provide a process for the production of a composite molded item, which process has an excellent production efficiency, particularly a high productivity of a molded item per molding equipment.

Still another object of the present invention is to provide a process for the production of a composite item which is light in weight, and which had a structure having a high physical strength and excellent appearance.

Yet another object of the present invention is to provide a process for the production of a composite molded item, which process permits free selection of the shape and size of the item.

Other objects and features of the present invention will be apparent from the following description.

As the result of intensive investigation by the present inventors, it has now been found that the above-described objects and features of the present invention can be achieved by a process for the production of an integral composite molded item comprising
(i) a surface portion comprising a synthetic resin phase containing a fibrous reinforcing material,
(ii) a core portion comprising the synthetic resin phase containing bubble-containing particles, such as foamed resinous particles or hollow beads, and
(iii) a separation layer positioned between the surface portion and the core portion,
   the process comprising the steps of:
   (a) providing in a substantially sealed mold a separation layer which does not substantially pass therethrough compressed lightweight particles of an elastic material but which is capable of passing a synthetic resin or its precursor that is liquidized at the time of molding;
   (b) providing the synthetic resin or its precursor in the mold;
   (c) arranging a fibrous reinforcing material between the separation layer and the mold, integrated with the separation layer or separately but associated therewith;
   (d) providing an aggregate of the compressed particles of the lightweight elastic material on a side of the separation layer opposite to the side of an inner surface of the mold;
   (e) causing volume expansion of the aggregate by relieving compression urged on the compressed lightweight particles to thereby expand the lightweight particles;
   (f) flowing the liquidized synthetic resin or its precursor through the separation layer to spread it over between the separation layer and the mold and among the particles of the lightweight elastic material, while pressing the separation layer onto the inner surface of the mold as the result of volume expansion in the step (e) above;
   (g) completing formation-solidification or solidification of the synthetic resin to form a surface portion and a core portion; and
   (h) taking out the resulting composite molded item.

Fig. 1 is a schematic cross-sectional view illustrating the arrangement the separation layer and the fibrous reinforcing material in the planer molded item produced by the process according to an embodiment of the present invention;
Figs. 2 and 3 each is a schematic cross-sectional view of the mold used in the process of the present invention, in which the separation layer and the fibrous reinforcing material are arranged.

The above-described process of the present invention has a feature that relief of the compression of the compressed particles of the lightweight elastic material is allowed to occur within the mold, thereby causing volume expansion of the aggregate of the particles, and the force generated by the volume expansion is utilized as much as possible and most efficiently.

In other words, the force generated by the volume expansion of the aggregate of particles directly acts as a force which is applied to the separation layer surrounding the aggregate to be pressed outwardly onto the inner surface of the mold and also as a force which is urged onto particles of the lightweight elastic material which have been relieved of compression applied thereto in the separation layer to bring them closer to each other to form a dense core portion. Furthermore, as the result of the volume expansion of the aggeregate of the particles, the synthetic resin or its precursor in a fluid state travels through the separation layer to penetrate into the fibrous reinforcing material and/or aggregate of the particles sufficiently, thereby realizing the formation of dense surface portion and foam-like core portion.

Thus, according to the process of the present invention, composite molded items can be obtained which have the following characteristics.
(i) The surface portion which comprises the synthetic resin containing the fibrous reinforcing material can be formed uniformly and densely all over the surface of the molded items. Practically no particles are present in the surface portion.
(ii) Because there is substantially no lightweight particle of the elastic material in the surface portion, the surface portion formed has a dense structure and the molded items obtained have a high physical strengths and excellent appearance.
(iii) The inner core portion in which the particles and the synthetic resin are packed without gaps between each other is formed. The separation layer is located between the core portion and the surface portion.
(iv) The circulation of the fluid synthetic resin or its precursor through the separation layer in the sealed mold forms the surface portion and the core portion and therefore the surface portion and the core portion together form a structure firmly integrated with each other by the communication of the same synthetic resin.

The process for the production of a composite molded item according to the present invention can be employed regardless of whether or the synthetic resin used is a thermosetting resin or a thermoplastic resin. Bubble-containing particles such as foamed resinous particles, hollow beads or expanded microballoon in the core portion can be used as particles of the lightweight elastic material of which compression has been relieved.

The molding process of the present invention is the following:

### Molding Process:

A process for the production of an integral composite molded item comprising
(i) a surface portion comprising a synthetic resin phase containing a fibrous reinforcing material,
(ii) a center portion comprising the synthetic resin phase containing bubble-containing particles, and
(iii) a separation layer positioned between the surface portion and the core portion,
   the process comprising the steps of:
   (a) providing in a substantially sealed mold a separation layer which does not substantially pass therethrough compressed lightweight particles of an elastic material but which is capable of passing a thermoplastic resin or the thermosetting resin that is liquidized at the time of molding;
   (b) providing the thermoplastic resin or the thermosetting resin in the mold;
   (c) arranging a fibrous reinforcing material between the separation layer and the mold, integrated with the separation layer or separately but associated therewith;
   (d) providing an aggregate of the compressed particles of the lightweight elastic material on a side of the separation layer opposite to the side of an inner surface of the mold;
   (e) causing volume expansion of the aggregate by relieving compression urged on the compressed lightweight particles to thereby expand the lightweight particles;
   (f) flowing the liquidized resin through the separation layer to spread it over between the separation layer and the mold, and among the particles of the lightweight elastic material themselves while pressing the separation layer onto the inner surface of the mold as the result of volume expansion in the step (e) above;
   (g) completing solidification of the resin to form a surface portion and a center portion; and
   (h) taking out the reuslting composite molded item.

The molding process of the present invention is carried out practically in a single step in a substantially sealed mold. In this case, any type of molds can be used as far as they can substantially be sealed hermetically at the time of molding and endure the molding pressure and temperature. Generally, those types of molds which are used in conventional molding methods such as RTM method (Resin Transfer Molding method), and RIM method (Reaction Injection Molding method) can be used in the process of the present invention. Any of metal molds, wood molds or resinous molds may be used.

As described earlier, the advantages of the molding process of the present invention are achieved by relief of compression urged on the particles of the lightweight elastic material to effect volume expansion of the aggregate of the particles and utilizing as much as possible and most efficiently the force of expansion by the use of the separation layer.

Therefore, the use of the separation layer is indispensable for achieving the objects of the present invention.

Accordingly, the separation layer used in the present invention must be one which does pass therethrough substantially no compressed particles of the lightweight elastic material but which is capable of passing therethrough the synthetic resin or its precursor.

Another desired performance of the separation layer is that it can endure pressure generated as the result of volume expansion of the aggregate of the particles. If the separation layer is broken or holes are made therein as the result of volume expansion and the particles of the lightweight elastic material pass the separation layer, it will be difficult to obtain the objective composite molded items.

In order to achieve the above-described performance, the mesh size or diameter of holes of the separation layer should be selected depending upon the size and shape of the particles of the lightweight elastic material in a compressed state.

When the separation layer which can pass the compressed particles of the lightweight elastic material is used, the surface portion of the molded item contains bubble-containing particles, and as the result the composite molded item obtained fails to exhibit satisfactory strength or has a poor appearance, and therefore its commercial value is low.

Specific examples of the material for preparing the separation layer include woven fabrics, knitted fabrics, unwoven fabrics, webs, paper, wire gauzes, and porous films. Of these, preferred are woven fabrics, knitted fabrics, unwoven fabrics and webs. The material therefor may be any of synthetic fibers, natural fibers metal fibers or the other inorganic fibers.

The structure of the separation layer is desirably such that substantially none of the compressed particles of the elastic material can pass it. That is, the structure of the separation layer is determined depending on the structure of the mold to be used for molding and the structure and shape of the objective composite molded item. Generally, the separation layer is of a bag-like or planar structure. The bag-like structure is particularly preferred. The bag-like or planar structure does not have to be a separation layer entirely. Instead, a portion of the structure may be constituted by other materials such as films and membranes unless the resulting structure shows substantial passing therethrough of the compressed particles of the lightweight elastic material and unless the object of the present invention is injured.

In the molding process of the present invention, the separation layer may be a structural material which is integrated with the fibrous reinforcing material that forms the surface portion. The use of such integrated structural material is a preferred embodiment of the present invention. A typical example of the integrated structural material is a fibrous reinforcing material which has a function of the separation layer at least on its surface portion.

Although detailed explanation on the fibrous reinforcing material will be made later on, it should be noted here that when this type of the reinforcing material is selected from, for example, woven fabrics, knitted fabrics, unwoven fabrics or webs, the reinforcing material itself have a function of the separation layer and therefore it can be used also as the separation layer if it does not pass therethrough the compressed particles of the lightweight elastic material on its inner surface portion (i.e., the surface which the compressed particles of the lightweight elastic material contact). In case of using such bifunctional fibrous reinforcing material is used, it is not always necessary to provide a separation layer independently. However, the separation layer and the fibrous reinforcing material may be used separately in association with each other or integrally as being laminated one on another.

As the fibrous reinforcing material for forming the surface portion of the composite molded item of the present invention, those fibrous reinforcing materials can be employed which are generally used for fiber-reinforced plastics. Preferred examples of such reinforcing material include glass fiber, carbon fiber, silicon carbide fiber, metal fiber, aramide fiber, polyallylate fiber, high-strength polyolefin fiber and mixtures of two or more of them. Besides these fibers, polyester fiber, nylon fiber, viscose fiber, natural fibers, or asbestos may be used. The fibers may be short fibers or long fibers, or whiskers.

It is preferred to use the fibrous reinforcing materials generally as a material having a fibrous structure. That is, the reinforcing material may advantageously be woven fabrics (plain weave fabrics, cord fabrics, twill fabrics, etc.), knitted fabrics, unwoven fabrics, UD filaments (unidirectionally oriented filaments) or webs.

Although it is unsuitable to use it in itself as a reinforcing material in the surface portion, the short fiber or whisker (for example, silicon carbide whisker, carbon whisker, silicon nitride whisker, etc.) can be used in the form of a portion of a web or unwoven fabric.

In the composite molded item of the present invention, the bubble-containing particles contained in the core portion are formed by relieving compression applied to the particles of the lightweight elastic material during the molding. Description on the particles will be made in detail below.

On the other hand, suitable particles of the lightweight elastic material are those which have a mean particle size of from about 50 µm to about 10 mm, and preferably about 500 µm to about 5 mm in a uncompressed state (at atmospheric pressure). As the particles of the lightweight elastic material, those particles can be used which recover their volume relative the original volume to a level of from about 10 % to about 100 %, and preferably from about 20 % to about 60 %.

Preferred examples of the polymer which constitutes the particles of the lightweight elastic material include polyolefin, polyurethane, and natural or synthetic rubber. Such particles of the lightweight elastic material are commercially available under trade names such as POLYPROPYLENE BEAD (e.g., PB-MG15P, for a product by JSP Co.), which can be used as it is.

The aggregate of the particles of the lightweight elastic material described above may be used as a mixture with non-expandable foamed or expanded particles which undergoes substantially no volume expansion by heating or relief of compression. The non-expandable particles must be those which do not pass the separation layer in substance. The use of the non-expandable particles as mixed with the aggregate of the above-described particles facilitates operations of molding and gives a composite molded item which has more excellent toughness and rigidity.

The above-described non-expandable particles may be either inorganic expanded hollow particles, such as inorganic microballoons, or organic expanded particles. Generally, inorganic expanded particles are preferred. Specific examples of the non-expandable inorganic expanded particles include glass balloons, silica balloons, and shirasu balloons (volcanic white sand balloons). Their mean particle size is preferably from about 1 µm to about 1 mm, and more preferably from about 5 µm to about 0.5 mm. Mixing ratio of the expandable particles or the particles of the lightweight elastic material to the non-expandable expanded particles is preferably from 10:1 to 1:5, and more preferably from 9:1 to 1:3, by weight.

The synthetic resin which can be used in the surface portion and the core portion in the production of the composite molded item of the present invention may roughly be classified into a thermosetting resin and a thermoplastic resin. These resins including their precursors may be the one generally used as a molding resin as far as they can each be liquidized or show fluidity at the time of molding. The thermosetting resin or its precursor is the one which cures as the result of the molding due to polymerization reaction and/or crosslinking reaction to give rise to a solid resin. Generally, the one which is liquid at room temperature is advantageous. By the term "precursor" is meant a monomer and prepolymer. Specific examples of the thermosetting resin include epoxy resins, polyuretane resins, unsaturated polyester resins, polyvinyl ester resins, polyimide resins, and polyamide resins. Of these, preferred are epoxy resins, polyurethane resins, unsaturated polyester resins and polyvinyl ester resins. If desired, curable polycycloolefin resins such as dicyclopentadiene resin may also be used.

Usually, thermosetting resins are employed as a mixture of the resin or its precursor with a curing agent and/or a promotor. In this invention, it is possible to use them in combination and it is more advantageous to do so.

On the other hand, any conventional thermoplastic resins that are usually used for molding can be used as far as they are molten and flow at a molding temperature. It is desirable to use those thermoplastic resins which show fluidity at a temperature in the range of from about 70°C to about 230°C, and preferably in the range of from about 80°C to about 200°C.

Specific examples of the thermoplastic resin include polyolefins (for example, polyethylene and polypropylene), polystyrenes, crystalline liquid polyallylate resins, phenoxy resins, polyvinyl chlorides, nylon and polyoxyalkylenes. Of these, preferred are polyolefins, polystyrenes, crystalline liquid-polyallylate resins and phenoxy resins are preferred. If desired, prepolymers which can be converted into thermoplastic resins can also be used.

Upon practicing the molding process of the present invention, at first the fibrous reinforcing material is arranged along the inner surface of the mold, and the separation layer is provided on the inner side thereof. When the separation layer and the fibrous reinforcing material are integrated with each other, and typically when the fibrous reinforcing material which has a function of the separation layer simultaneously is used, the integrated material may be arranged all over the inner surface of the mold, with the surface having a function of the separation layer being directed inwards.

How to arrange the separation layer and the fibrous reinforcing material depends on the shape, size, physical properties and utility of the objective composite molded item.

As described earlier, the molding process of the present invention, during the molding step, effectively utilizes volume expansion of the compressed particles of the lightweight elastic material and accordingly the separation layer and the fibrous reinforcing material should be arranged so that the aggregate of the particles can press the separation layer all over the inner surface of the mold when volume expansion thereof occurs.

Needless to say, the separation layer must be arranged in accordance with the shape of the mold so that bubble-containing particles can be prevented from contaminating the surface portion of the composite molded item. Even if the separation layer had a property substantially not allowing the compressed particles of the lightweight elastic material to pass therethrough, incomplete arrangement of the separation layer in the mold could cause movement or transfer of the particles from a portion of its periphery toward the surface portion. This is undesirable and should be avoided.

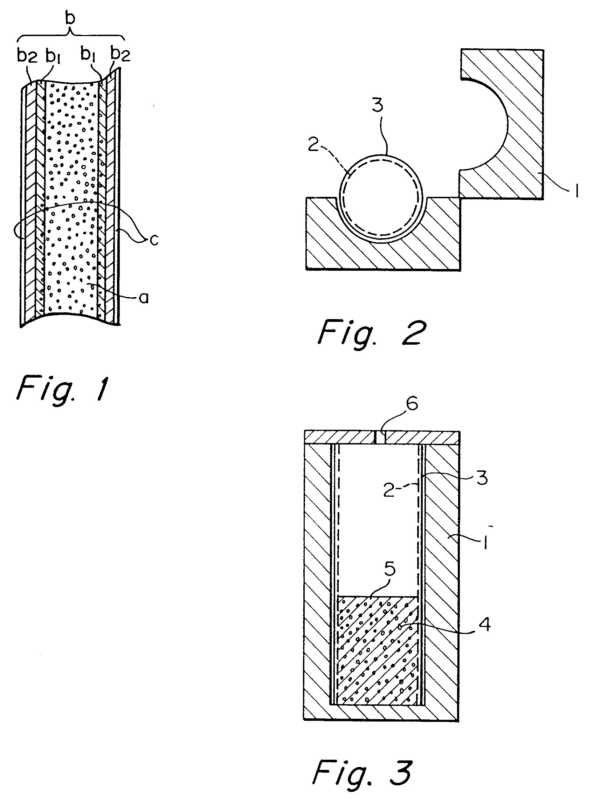

For example, when it is desired to produce rod-like or cylindrical molded items, it is sufficient to arrange on the inner surface of the mold the separation layer and the fibrous reinforcing material in the form of a bag-like structure (hollow cylinder) in response to the desired shape of the molded items. Figs. 2 and 3 attached hereto schematically illustrate this type of arrangement. On the other hand, if it is contemplated to produce planar molded items, it is sufficient to arrange the separation layer and the fibrous reinforcing material all over the inner surface of the mold. In this case, the separation layer may be of a bag-like structure. Fig. 1 shows an example of the arrangement of the separation layer and the fibrous reinforcing material in the mold in the case of producing the planar molded item.

When producing planar molded items or flat-ones with front and back faces, the separation layer may be arranged only on one side of the inner surface of the mold. In this case, the other side may be free without providing a separation layer, may have, instead of the separation layer, a material such as a film which does not pass therethrough even the liquid molding resin, or may have a separation layer, and selection may be made properly depending on the purpose, for example, when the production of cowling for motorcycles is desired, the operations of coating the front face and affixing a dechalcomanie pattern thereto can be simplified by arranging a printed film on the side of the front face and using a separation layer of woven fabric of glass fiber on the side of the back face. In the case where it is desired to produce a plate as a structural material which requires a high rigidity, a separation layer may be provided on each face and a fibrous reinforcing material may be arranged between each separation layer and the inner surface of the mold.

As described earlier, after arranging the separation layer and the fibrous reinforcing material in the mold, the lightweight elastic particles are provided on the separation layer on a side opposite to the side of the inner surface of the mold, or when a bag-like structure is used as the separation layer, in the inside of the bag-like structure. In particular, when a bag-like structure is used as the separation layer, the particles of the lightweight elastic material may be introduced in the inside of the bag-like structure in advance outside the mold.

Usually, it is desirable to introduce the particles of the lightweight elastic material into the mold before closing the mold.

In the composite molded item of the present invention, the component which constitutes the synthetic resin, i.e., thermoplastic resin or thermosetting resin or their precursors (hereafter, sometimes referred to generally as "synthetic resin component") can be arranged in or supplied into the mold by various methods.

Roughly speaking, they may be classified into the following groups.
(1) A method in which the synthetic resin component is mixed with or impregnated to the separation layer or the fibrous reinforcing material.
(2) A method in which the synthetic resin component is mixed with or impregnated to the aggregate of the particles of the lightweight elastic material.
(3) A method in which the synthetic resin component is poured into the mold after closing it.

The methods (1) to (3) may be used singly or any desired combination of two or more of them may be used.

Which of the methods (1) to (3) is to be adopted depends on the type of the synthetic resin, in particular whether it is a thermoplastic resin or a thermosetting resin.

When the thermosetting resin or its precursor is liquid at room temperature, the methods (1), (2), (3) and combinations thereof may be adopted. However, the methods (2) and (3) may be advantageous. In the method (1), it is advantageous that a thermosetting resin or its precursor which is liquid is impregnated in the separation layer and the fibrous reinforcing material, mainly in the fibrous reinforcing material, in advance, and then the impregnated layer and material are arranged in the mold, and then the particles of the lightweight elastic material are arranged in the mold, followed by closing it and elevation of the temperature thereof. In this case, a portion of the thermosetting resin or its precursor moves from in the fibrous reinforcing material through the separation layer to the aggregate of the particles where it is impregnated, as the result of relief of compression of the compressed particles of the lightweight elastic material so that the synthetic resin component spreads all over in the mold.

On the other hand, when the thermosetting resin or its precursor is solid at room temperature but becomes fluid at a predetermined molding temperature, the methods (1), (2) or combination thereof may be adopted. Concrete example of one of the methods which can be adopted is a method in which solid powder of the thermosetting resin or its precursor is mixed with the particles of the lightweight elastic material in advance, and the resulting mixture is arranged at a predetermined position prior to molding. In this method, heating of the mold renders the resin component fluid, and according as the aggregate of the particles undergoes volume expansion a core portion is formed and at the same time a portion of the particles flows passing through the separation layer to the fibrous reinforcing material for a surface portion.

This improved method can be practiced employing the particles of the lightweight elastic material. More specifically, a solid integrated intermediate product composed of the above-described resin component as a matrix and compressed particles of the lightweight elastic material dispersed in the matrix is prepared in advance outside the mold, which intermediate product is used as the mixture of the particles of the lightweight elastic material with the resin. The integrated solid mixture is arranged at a predetermined position in the mold, followed by closing and heating the mold to render the matrix resin component in the solid mixture fluid to thereby relieving the compression applied to the particles of the lightweight elastic material, resulting in volume expansion. In accordance therewith a core portion is formed, and a portion of the resin component passes through the separation layer and flows into the fibrous reinforcing material to form a surface portion.

When the synthetic resin component is a thermoplastic resin, the methods (1) or (2), particularly preferably the method (2), can be adopted. More specifically, the method (2) is a method which is basically the same with the above-described method in which the thermosetting resin or its precursor which is solid at room temperature and which can be rendered fluid at a molding temperature is used as the synthetic resin component. That is, one of them is a method in which solid powder of a thermoplastic resin (the one which is capable of being rendered fluid at a molding temperature) is mixed with the particles of the lightweight elastic material in advance, and the resulting mixture is arranged at a predetermined position in the mold. Another improved method is the one in which an integrated solid intermediate product is prepared in advance outside the mold which intermediate product contains a thermoplastic resin component as a matrix and the compressed particles of the lightweight elastic material dispersed in the matrix, and this intermediate product is utilized.

The amounts and proportions of the separation layer, fibrous reinforcing material, synthetic resin component and particles of the lightweight elastic material which are charged in the mold, may be varied in a wide range depending on the properties and utilities of the objective composite molded items. However, what is necessary is that the amonts of the respective components in the mold are such that at the time of molding cavity do not exist after volume expansion of the aggregate of the particles of the lightweight elastic material.

In particular, it is desirable to use upon proper selection the separation layer, fibrous reinforcing material, synthetic resin component, particles of lightweight elastic material and other additives so that the composite molded item of the present invention may have one of the following compositions a) to e).
a) In a subsatntial portion where a core portion is present in the composite molded item, the core portion occupies from about 30 % to about 95 % by volume, and preferably from about 40 % to about 90 % by volume.
b) The specific density at the core portion is from about 0.05 to about 0.8 g/ml, and preferably about 0.1 to 0.6 g/ml.
c) The proportion of the synthetic resin in the core portion is from about 15 to 70 % by volume, and preferably from about 20 to 50 % by volume.
d) In the surface portion, the total amount of the fibrous reinforcing material and the separation layer occupy from about 30 to 80 % by volume, and preferably from about 30 to 60 % by volume.
e) In the surface portion, there is substantially no particle of the lightweight elastic material.

In the molding method of the present invention, as described earlier, each of components is charged in the mold and the mold is heated from outside, or when a thermosetting resin is used which generates heat upon its curing, the temperature of the mold is elevated by the heat generation at the time of curing or both to firstly relieve the compression applied to the particles of the lightweight elastic material in order to cause volume expansion of the aggregate of the particles. When an integrated intermediate product comprising a synthetic resin matrix and the particles dispersed in the matrix, the matrix component is rendered fluid to cause volume expansion of the aggregate of the particles.

In this case, while volume expansion of the aggregate of the particles is taking place, at least the synthetic resin component must retain its fluidity. Thus, as the result of volume expansion of the aggregate of the particles, the separation layer is pressed in a direction toward the inner surface of the mold and at the same time the flow of the synthetic resin component takes place from the inside (core portion) to the outside (inner surface of the mold) through the separation layer, or from the outside to the inside.

As the result, a dense surface portion is formed and a core portion composed of the particles of the lightweight elastic material and the synthetic resin is also formed, and the surface portion and the core portion are communicated by the same synthetic resin through the separation layer to obtain a firmly integrated composite molded item.

On the other hand, upon molding, excess of the synthetic resin component is accumulated in a pool in the mold or drawn out through a vent, and then the synthetic resin is cured or cooled to solidify it. Then the mold is opened and the composite molded item thus formed is taken out of the mold by a conventional technique, followed by finishing, if desired, to obtain a final product. The composite molded item thus obtained may be post-cured in an oven.

In the process of the present invention, the core may contain a reinforcing short fiber such as short-cut fiber or whiskers, pre-formed lightweight material, for example, a pre-formed foam, or other additives.

As stated in the foregoing, the present invention can give rise to composite molded items which are light in weight and have a high toughness substantially in a single step.

According to the present invention, lightweight, tough composite sandwiched core molded items can be produced with good productivity at low cost. The composite molded articles thus obtained can be used effectively in a wide range of applications, for example, in the field of sport goods such as canoe paddles, masts, vertical rudders, fins of wind surfing boards (skegs), man-power hydrofoil vessels, ski boards and sticks, hockey sticks, bats for baseball, sporkless wheels, frames of bicycles, and skating boards, in the field of vehicles such as spoilers, drive shafts, interiors and exteriors, of automobiles (cars, buses and trucks), doors and structural materials of transportations, in the field of industrial machiens and devices such as top plates of heat-exchangers, compressor blades for air conditioner, blades of stirrers, electric insulation material support beams, and fittings, in the field of medical apparatus such as wheel chairs (hand rims, side panels), tables for X ray projection, prosthetic hand and feet, and various other utilities including propellers, benches, furniture, controlling surfaces, secondary structural materials, reflectors of antennae for sattelite broad casting.

Hereinafter, this invention will be explained in detail with reference to examples. "Parts" in the examples means parts by weight.

### Example 1

An epoxy resin and a curing agent produced by Shell Co., i.e. EPIKOTE 807 (100 parts) and EPOMATE YLH006 (31 parts) were mixed to form a liquid resin A.

On the other hand, commercially available polypropylene beads PB-MG15P was obtained as the particles of the lightweight elastic material. The particles were left to stand so that they could undergo no thermal expansion. The apparent density of the beads was about 0.05 g/cm². The beads were provided in an amount of 36 parts.

Two male molds were provided which were adapted to produce fin-shaped models having a size of at most 120 mm wide, at most 350 mm long and at most 14 mm thick. The mold was provided with nozzles on the upper and lower portions thereof. Six sheets of glass cloth were prepared whose size was adapted for the mold. A bag having a size adapted for the mold was prepared with an unwoven polyester fabric "UNICELL BT-400", in which the above-described polypropylene beads were charged and the bag was sealed.

The polypropylene bead-incorporated bag was covered with the glass coth therearound and was housed in the mold. Then the mold was sealed. Pressure was applied to the mold with nitrogen gas so that the inner pressure of the mold reached 1.5 kg/cm². In this state, the epoxy resin was injected into the mold. The resin was pressed in from the lower nozzle and allowed to flow out from the upper nozzle. Then the nozzle was changed to a slightly opened state and it was closed while the resin was still coming out therefrom.

The mold containing the resin was dipped in a warm bath kept at 70°C to cure the resin. After retaining for 1 hour, the mold was taken out from the warm bath. After cooling molded item was taken out from the mold. A good model was obtained which had a specific gravity of 0.8.

### Example 2

An unsaturated polyester resin, "YUPIKA X-314" (100 parts), a curing agent, "RUPASOL 224" (peroxide) (1 part) and a promotor "PRM" (cobalt catalyst) (0.5 part) were mixed to form a liquid resin B.

The same expanded polypropylene particles as those used in Example 1 (3 parts) and inorganic hollow balloon M28 produced by Asahi Glass Co. (1 part) were mixed to form a mixture C.

The same polyester/polypropylene unwoven cloth, "UNICELL", used in Example 1 was employed to prepare a bag having a size slightly smaller than the inside dimension of a mold to be used. The mixture C was packed in the bag.

On the other hand, a mold was formed by inserting a TEFLON (PTFE) frame between two aluminum plates, and the mold was provided with nozzles on the upper and lower ends thereof. Six sheets of glass cloth as large as the mold, and eight sheets of oblong (narrow tablet-form) glass cloth having the same length as the mold and the same width as that of the nozzle were prepared. Using the larger glass cloths, glass cloth/expandable mixture C packed in the bag/glass cloth were charged in this order in the mold. The smaller glass cloths were superimposed at the position where the nozzles were to be covered, i.e., the upper and lower ends were filled therewith. The liquid resin B was injected under pressure into the mold through the inlet at the lower portion of the mold using a syringe to a height of 50 mm from the bottom of the mold and the mold was dipped in a warm bath at 70°C. Then pressure was discharged.

After 1 hour, the mold was taken out from the bath. After cooling, a molded item was taken out from the mold. Thus a good lightweight sandwiched material having an inner layer of the expanded polypropylene and polyester. The molded item had a flexural strength of 6.2 kg/mm² and a flexural modulus of 480 kg/mm².

### Example 3

Polypropylene beads PB-MG15P (produced by JSP Co.) were obtained. The beads were left to stand so that they could undergo no thermal expansion. The apparent density of the beads was about 0.05 g/cm². The beads were particles having a property of undergoing reduction in size when compressed and recovering their original volume when the pressure was relieved. The beads are named PPB.

An expoxy resin and a curing agent produced by Shell Co., i.e., EPIKOTE 1001 (this was in itself thermoplastic) (70 parts), EPIKOTE 348 (30 parts), phthalic anhydride (30 parts) and EPOMATE YLH 185 (1 part) were mixed at 80°C to form a thermo-fusing resin A, PPB (50 parts) and Resin A (100 parts) were mixed at 80°C, and the mixture was charged in a mold preheated to 80°C. The mold was compressed under pressure of 7.5 kg/cm² and then immediately cooled in the refrigerator. Then, the mold was opened to obtain a sheet of about 5 mm thick. This sheet was called an intermediate material B.

A mold was prepared by inserting TEFLON (PTFE) frame of a thickness of 3 mm between two aluminum plates. Nozzles were provided on the upper and lower ends thereof, respectively. Two sheets of glass cloth as large as the mold, and ten sheets of oblong (narrow tablet-form) glass cloth having the same length as the mold and the same width as that of the nozzle were prepared. Using the larger glass cloths, glass cloth/intermediate material B/glass cloth were charged in this order in the mold. The smaller glass cloths were superimposed at the position where the nozzles were to be covered, i.e., the upper and lower ends, were filled with the smaller glass cloths superimposed one on another place of the intermediate material B so that the polypropylene beads did not enter inside. Using the both nozzles, the inside of the mold was evacuated. Then, the mold was entirely dipped in a silicone oil bath kept at 120°C and heated. Small amounts of the resin and of gas were overflown from the nozzles and the nozzles were closed one by one. This was done almost at the same time. After heating it for 1 hour, the mold was taken out from the warm bath and cooled, followed by taking out a molded item from the mold. Thus, a good sandwiched composite material was obtained which was composed of a glass fiber-reinforced resin on the surface and an inner layer of an epoxy resin having dispersed therein expanded polypropylene. The molded item thus obtained contained molded product of polypropylene prevailed uniformly except where the smaller glass cloth was incorporated. The molded item had a density of 0.52 g/cm², a flexural strength of 3.3 kg/mm², and a flexural modulus of 397 kg/mm².

### Example 4

Epoxy resin EPIKOTE 1001 used in Example 3 is a resin which has a pour point of no higher than 80°C and which in itself shows thermoplastic property. Using this resin alone, similar trial production was performed.

As the ressin was used EPIKOTE 1001, and this was mixed with PPB in a ratio of 100:100. After fusing the mixture at 80°C, pressure of 7.5 kg/cm² was applied to for a sheet-like intermediate material D, which was sandwiched by glass cloths and then housed in a mold. The mold was dipped in a warm bath kept at 100°C, and heated. The sample obtained was similar to that obtained in Example 3. The sample had a specific gravity of 0.45 g/cm³, which value was smaller than the sample obtained in Example 3. On the other hand, in the case of EPIKOTE 1001 (100 parts), PPB (100 parts), glass beads M28 (50 parts) were mixed, the product had a specific gravity of 0.42, which means that the weight became lighter. As for the sizes of the expanded material and of the hollow material, the latter was remarkably small, and it was supposed that the cavity to be filled by the former was filled by the latter.

### Example 5

This is an example in which square bar was prepared.

A mold having a cross section of 20 mm x 20 mm and a length of 500 mm was prepared. The mold was provided with a nozzle on each end.

### Epoxy resin

An epoxy resin, i.e., EPIKOTE 807 (100 parts), and a curing agent, i.e., EPOMATE YLH006 (31 parts), both produced by Shell Co., were mixed to form a liquid resin A. The amount of the resin was 393 g. On the other hand, commercially available polypropylene beads PB-MG15P was obtained as the particles of the lightweight elastic material. The particles were left to stand so that they could undergo no thermal expansion. The apparent density of the beads was about 0.05 g/cm³. The beads, which had elasticity and could recover the original state if compressed, were provided in an amount of 10 parts.

A tube having a peripheral length of 80 mm was made of UNICELL BT0404, in which a half amount of the above-described polypropylene beads was packed.

The UNICELL tube packed with the polypropylene beads was covered with two layers of carbon fiber braid and a single layer of glass fiber braid. The braids used were Toreca T-3964 and Toreca T-3484, and the glass fiber braids used were Atkins and Beers #9273. The braids were superimposed in the order of T-3484, #9273 and T-3964.

The laminate was housed in the above-described mold and the rest half of the polypropylene beads was pressed into the mold, and the tube of UNICELL and the mold were closed.

The mold was placed horizontally, and the inner pressure was reduced with a vacuum pump to substantially attain complete vacuum once, and then pressurized using nitrogen. The mold was kept at a pressure of 1.5 kg/cm² and the liquid resin A was pressed thereinto. When overflow of the resin was confirmed, charging of the resin was stopped.

The mold was dipped in a warm bath kept at 70°C and pressure venting was performed while discharging the resin. After 1 hour, the mold was taken out from the warm bath. After cooling, a molded item was taken out from the mold. Thus, a lightweight square bar was obtained, which was composed of the carbon/glass fiber reinforced epoxy resin in the surface and the epoxy resin having dispersed therein expanded polypropylene. The specific gravity of the molded item inclusive the skin was 0.56 g/cm³.

## Claims

1. A process for the production of an integral composite molded item comprising
(i) a surface portion comprising a synthetic resin phase containing a fibrous reinforcing material,
(ii) a core portion comprising the synthetic resin phase containing bubble-containing particles, and
(iii) a separation layer positioned between the surface portion and the core portion,
the process comprising the steps of:
(a) providing in a substantially sealed mold a separation layer which does not substantially pass therethrough compressed lightweight particles of an elastic material but which is capable of passing a thermoplastic resin or thermosetting resin that is liquidized at the time of molding;
(b) providing the thermoplastic resin or the thermosetting resin in the mold;
(c) arranging a fibrous reinforcing material between the separation layer and the mold, integrated with the separation layer or separately but associated therewith;
(d) providing an aggregate of the compressed particles of the lightweight elastic material on a side of the separation layer opposite to the side of an inner surface of the mold;
(e) causing volume expansion of the aggregate by relieving compression urged on the compressed lightweight particles to thereby expand the lightweight particles;
(f) flowing the liquidized resin through the separation layer to spread it over between the separation layer and the mold, and among the particles of the lightweight elastic material themselves while pressing the separation layer onto the inner surface of the mold as the result of volume expansion in the step (e) above;
(g) completing solidification of the resin to form a surface portion and a core portion; and
(h) taking out the resulting composite molded item.

2. A process as claimed in claim 1, wherein the separating layer is a structural material integrated with the fibrous reinforcing material.

3. A process as claimed in claim 1, wherein the separating layer is a material selected from the group consisting of woven fabrics, knitted fabrics, unwoven fabrics, webs, paper, metal gauzes and porous membranes which passes substantially none of the expandable particles nor the compressed particles of the lightweight elastic material.

4. A process as claimed in claim 1, wherein the fibrous reinforcing material is a material selected from the group consisting of woven fabrics, knitted fabrics, unwoven fabrics, unidirectionally oriented filaments and webs.

5. A process as claimed in claim 1, wherein the fibrous reinforcing material is at least one fiber selected from the group consisting of glass fiber, carbon fiber, silicon carbide fiber, metal fiber, aramide fiber, polyallylate fiber, polyolefin fiber, nylon fiber and polyester fiber.

6. A process as claimed in claim 1, wherein the particles of the lightweight elastic material have a mean particle size of from about 50 µm to about 10 mm in a non-compressed state.

7. A process as claimed in claim 1, wherein the particles of the lightweight elastic material can recover their volume by relieving compression applied thereto to a level from about 10% to about 100% based on an original volume thereof.

8. A process as claimed in claim 1, wherein the particles of the lightweight elastic material are formed of polyolefin, polyethylene, natural rubber or synthetic rubber.

9. A process as claimed in claim 1, wherein the thermoplastic resin is molten at a molding temperature.

10. A process as claimed in claim 1, wherein the thermoplastic resin shows fluidity at a temperature of from about 70°C to about 230°C.

11. A process as claimed in claim 1, wherein the thermoplastic resin is polyolefin, polystyrene, crystalline liquid polyallylate resin or phenoxy resin.

12. A process as claimed in claim 1, wherein the thermosetting resin or its precursor has a fluidity at least at a molding temperature.

13. A process as claimed in claim 1, wherein the thermosetting resin is polyurethane, epoxy resin, unsaturated polyester, polyvinyl ester, or polycycloolefin resin.

14. A process as claimed in claim 1, wherein the aggregate of the particles of the lightweight elastic material contains non-expandable foamed particles.

15. A process as claimed in claim 14, wherein the particles of the lightweight elastic material and non-expandable foamed particles are present in a weight ratio in the range of from 10:1 to 1:2.

16. A process as claimed in claim 14, wherein the non-expandable foamed particles are inorganic microballoons.

17. A process as claimed in claim 1, wherein the separation layer is of a bag-like structure.

18. A process as claimed in claim 1, wherein the separation layer is of a bag-like structure in which the aggregate of the compressed particles of the lightweight elastic material is contained.

19. A process as claimed in claim 1, wherein the separation layer is of a bag-like structure in which the aggregate of the compressed particles of the lightweight elastic material and the synthetic resin or its precursor are contained.

20. A process as claimed in any one of claims 17 to 19, wherein short fiber or whisker is contained in the bag-like structure.
